## Europäisches Patentamt

## European Patent Office

## Office européen des brevets

(19)

(11) Veröffentlichungsnummer: **0 043 422**
**B1**

(12) # EUROPÄISCHE PATENTSCHRIFT

(45) Veröffentlichungstag der Patentschrift:
14.11.84

(51) Int. Cl.³: **G 02 B 7/26**

(21) Anmeldenummer: **81103548.4**

(22) Anmeldetag: **09.05.81**

(54) **Koppelvorrichtung mit Klemmbrücken für in Stecker gefasste Lichtleitfasern.**

(30) Priorität: **09.07.80 DE 3025888**

(43) Veröffentlichungstag der Anmeldung:
**13.01.82 Patentblatt 82/2**

(45) Bekanntmachung des Hinweises auf die Patenterteilung:
**14.11.84 Patentblatt 84/46**

(84) Benannte Vertragsstaaten:
**FR GB IT NL**

(56) Entgegenhaltungen:
**DE - A - 2 524 644**
**DE - A - 2 754 347**
**US - A - 4 193 664**

**Patents Abstracts of Japan, Band 2, Nr. 35, 9 März 1978,**
**Seite 12746E77**

(73) Patentinhaber: **Philips Kommunikations Industrie AG,**
**Thurn-und-Taxis-Strasse 10, D-8500 Nürnberg 10 (DE)**

(72) Erfinder: **Schmidt, Bernhard, Rehfeld 8,**
**D-5206 Neunkirchen 1 (DE)**

(74) Vertreter: **Patentanwälte Dr. Solf & Zapf,**
**Schlossbleiche 20 Postfach 13 01 13,**
**D-5600 Wuppertal 1 (DE)**

ACTORUM AG

## Beschreibung

Die Erfindung betrifft eine Koppelvorrichtung für in Stecker gefasste Lichtleitfasern, mit einem Gehäuse und einem in Richtung seiner Längsachse, sowie quer dazu geteilten Klemmkörper, mit dem die Stecker festklemmbar sind und der zusammen mit auf diesen einwirkenden Druckkörpern in einer Aussparung des Gehäuses angeordnet ist, wobei die lichte Höhe der Aussparung für die Druckkörper derart bemessen ist, dass sie grösser als der Durchmesser der Druckkörper ist und die Druckkörper mit Hilfe von kraftübertragenden Druckstücken durch Drehung von mit dem Gehäuse verbindbaren, endseitigen Schraubkappen gegen die Klemmkörper pressbar sind.

Eine Koppelvorrichtung für in Stecker gefasste Lichtleitfasern nach dem Oberbegriff des Anspruches 1 ist bereits aus dem DE-GM 79 35 570 bekannt. Derartige Koppelvorrichtungen dienen dem lösbaren Verbinden zweier Lichtleitfaserenden. Hierzu werden diese jeweils in Steckern gefasst, die dann in die die Verbindung herstellenden Koppelvorrichtung auf Stoss eingelegt werden. Unter «in Steckern gefasst» ist die Befestigung der Lichtleitfaserendbereiche in dafür vorgesehene Stecker zu verstehen. Der Stecker ist vorzugsweise als kreiszylindrische Hülse ausgebildet, in deren axial verlaufender Durchgangsöffnung die jeweilige Lichtleitfaser derart befestigt ist (z.B. durch Verklebung), dass der Lichtleitfaserendbereich die Hülse durchsetzt und das Lichtleitfaserende plan sowie achssenkrecht zur Lichtleitfaserlängsachse mit der Hülsenstirnfläche abschliesst. Aufgabe des Steckers ist es, die relativ empfindlichen Lichtleitfasern vor Beschädigungen zu schützen und diese mechanisch zu verstärken. Der Klemmkörper, der aus dem obengenannten DE-GM 79 35 570 bekannten Koppelvorrichtung ist hülsenförmig gestaltet und besitzt zwei, über seine gesamte Länge verlaufende Ansätze. Einer dieser Ansätze ist quer zur Längsachse des Klemmkörpers geschlitzt. Zwischen den beiden Ansätzen verläuft ein Längsschlitz, so dass durch Zusammenpressen des Klemmkörpers − und gleichzeitiger Verkleinerung der lichten Weite des Längsschlitzes − die gewünschte Klemmwirkung für das Festhalten der in Steckern gefassten Lichtleitfasern erzielt werden kann. Als auf den Klemmkörper wirkende Druckkörper sind Kugeln oder Körper mit trapezförmigen bzw. dreieckförmigen Querschnitten vorgesehen.

Um über die Koppelvorrichtung eine fehlerfreie und möglichst verlustarme Übertragung von Informationen zu erreichen ist es erforderlich, dass die beiden aneinanderstossenden Lichtleitfaserstecker genau zueinander zentriert sowie miteinander fluchtend ausgerichtet sind. Bei der aus dem DE-GM 79 35 570 bekannten Koppelvorrichtung ist jedoch aufgrund von Unrundheiten der inneren, an den Lichtleitfasersteckern anliegenden Wandungen des hülsenförmig gestalteten Klemmkörpers und/oder unterschiedlich stark eingestelltem Klemmendruck beider Seiten der Koppelvorrichtung die genaue Zentrierung der beiden Lichtleitfaserstecker nicht immer möglich.

Aus der DE-A 25 24 644 ist eine Vorrichtung bekannt, mit der zwei von ihrer Beschichtung befreite Lichtleitfaser-Enden gekoppelt werden können. Hierzu werden die beiden blanken Lichtleitfaser-Enden in prismatische Nuten eingeschoben und mittels einer Klemmeinrichtung, die aus einem in eine Bohrung eingebrachten, elastischen Pfropfen und einer federnden, darüber geschobenen Klammer besteht, befestigt. Eine individuelle, für eine genaue Zentrierung vorteilhafte, auf beide Lichtleitfaser-Enden separat vornehmbare Verklemmung lässt sich mit dieser bekannten Vorrichtung jedoch nicht durchführen.

Der Erfindung liegt daher die Aufgabe zugrunde, eine Koppelvorrichtung der eingangs genannten Art so weiterzubilden, dass die beiden aneinanderstossenden Lichtleitfaserstecker genau zueinander zentriert und fluchtend miteinander ausgerichtet werden.

Diese Aufgabe wird erfindungsgemäss dadurch gelöst, dass der Klemmkörper aus einem der Länge des Gehäuses entsprechenden Unterteil und zwei getrennten, gleichen, zusammen der Länge des Gehäuses entsprechenden Oberteilen besteht, dass das Unterteil als Prisma mit einer V-förmigen Nut ausgebildet ist und die beiden Oberteile als Klemmbrücken gestaltet sind, dass die Druckkörper als Zylinderrollen ausgebildet sind, die quer zur Längsachse des Gehäuses angeordnet und gegen die Klemmbrücken pressbar sind.

Die Vorteile der Erfindung liegen insbesondere darin, dass mit der erfindungsgemässen Koppelvorrichtung eine fehlerfreie und verlustarme Informationsübertragung möglich wird. Darüber hinaus bewirken die über die gesamte Breite der Klemmbrücken anliegenden Zylinderrollen auf diese eine gleichmässige Kraftverteilung, so dass ein seitliches Verkanten auszuschliessen ist. Gegenüber Druckkörpern mit trapezförmigen bzw. dreieckförmigen Querschnitten besitzen die erfindungsgemässen Zylinderrollen den weiteren Vorteil der reibungsarmeren Kraftübertragung.

Durch die V-förmige Nut des Prismas wird eine sehr genaue Zentrierung der Lichtleitfaserstecker bewirkt.

Nach einer Weiterbildung der Erfindung sind die Klemmbrücken jeweils mit einer zur V-förmigen Nut korrespondierenden, teilkreisförmigen Nut versehen, welche dem Durchmesser des jeweiligen Lichtleitfasersteckers entsprechend gestaltet ist. Durch diese Massnahme wird eine optimale Anpassung der Klemmbrücken an die Form der Lichtleitfaserstecker erzielt, wodurch eine gleichmässige Druckverteilung auf die Steckeroberfläche erfolgt.

Weiterhin ist vorgesehen, dass die V-förmige sowie die teilkreisförmige Nut jeweils so ausgebildet ist, dass bei in die Koppelvorrichtung eingebrachten und betriebsfertig montierten Lichtleitfitsteckern zwischen dem Prisma und der jeweiligen Klemmbrücke ein Luftspalt besteht. Hierdurch wird ein eventuelles Nachspannen des Klemmkörpers ermöglicht, ausserdem lassen sich dadurch Durchmesstoleranzen der Lichtleitfaserstecker ausgleichen.

Nach einer anderen Weiterbildung der Erfindung sind die Zylinderrollen in einer einheitlichen, das Gehäuse vollständig durchsetzenden Aussparung angeordnet, wobei die Zylinderrollen entsprechend ihrer Zugehörigkeit zur jeweiligen Klemmbrücke mittels eines mittig zum Gehäuse angeordneten Sperrstifts separierbar sind.

Ein Ausführungsbeispiel der Erfindung ist in der Zeichnung dargestellt und wird im folgenden näher beschrieben. Es zeigen:

Fig. 1 eine Seitenansicht im Schnitt einer Koppelvorrichtung für in Stecker gefasste Lichtleitfasern und

Fig. 2 eine Schnittansicht von Teilen der Koppelvorrichtung.

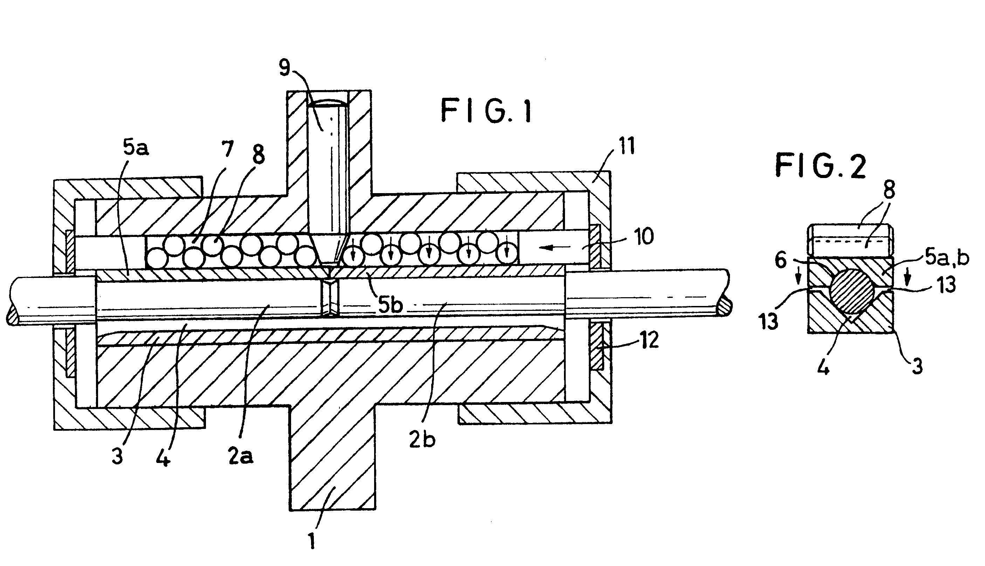

Nach Fig. 1 sind die einzelnen Teile der Koppelvorrichtung von einem Gehäuse 1 umgeben. Dieses Gehäuse 1 ist symmetrisch aufgebaut und besitzt an beiden Enden Öffnungen zur Aufgabe von Lichtleitfasersteckern 2a und 2b, die im eingebrachten Zustand in der Mitte des Gehäuses zusammentreffen. Zur Aufnahme dieser Stecker ist ein Prisma 3 vorgesehen, das eine V-förmige Nut besitzt, in die beide Stecker eingelegt werden. Der Stecker 2a wird von einer Klemmbrücke 5a und der Stecker 2b von einer Klemmbrücke 5b abgedeckt. Beide Klemmbrücken sind mit einer runden Ausnehmung 6 (nur in Fig. 2 dargestellt) versehen, die dem Durchmesser der Stecker entsprechend gestaltet ist. Oberhalb der Klemmbrücken befindet sich eine durchgehende Aussparung 7 zur Aufnahme von Zylinderrollen 8. Um eine individuelle Klemmung beider Stecker zu gewährleisten, ist die Aussparung 7 durch einen von aussen bedienbaren Sperrstift 9 unterteilt. Die Anzahl der Zylinderrollen 8 ist so bemessen, dass in die Aussparung 7 jeweils ein Druckstück 10 eingreifen kann, das den über eine endseitige Schraubkappe 11 erzeugten Druck über eine Druckscheibe 12 auf die Zylinderrollen 8 überträgt.

In Fig. 2 sind Teile der Koppelvorrichtung im Schnitt dargestellt und es ist zwischen den Klemmbrücken 5a, 5b und dem Prisma 3 ein Luftspalt 13 ersichtlich.

## Patentansprüche

1. Koppelvorrichtung für in Stecker (2a, 2b) gefasste Lichtleitfasern, mit einem Gehäuse (1) und einem in Richtung seiner Längsachse, sowie quer dazu geteilten Klemmkörper (3, 5a, 5b), mit dem die Stecker festklemmbar sind und der zusammen mit auf diesen einwirkenden Druckkörpern (8) in einer Aussparung des Gehäuses (1) angeordnet ist, wobei die lichte Höhe der Aussparung (7) für die Druckkörper (8) derart bemessen ist, dass sie grösser als der Durchmesser der Druckkörper (8) ist, und die Druckkörper (8) mit Hilfe von kraftübertragenden Druckstücken (10) durch Drehung von mit dem Gehäuse (1) verbindbaren, endseitigen Schraubkappen (11) gegen den Klemmkörper (3a, 5a, 5b) pressbar sind, dadurch gekennzeichnet, dass der Klemmkörper (3, 5a, 5b) aus einem der Länge des Gehäuses (1) entsprechenden Unterteil (3) und zwei getrennten, gleichen, zusammen der Länge des Gehäuses (1) entsprechenden Oberteilen (5a, 5b) besteht, dass das Unterteil (3) als Prisma (3) mit einer V-förmigen Nut (4) ausgebildet ist und die beiden Oberteile (5a, 5b) als Klemmbrükken (5a, 5b) gestaltet sind, dass die Druckkörper (8) als Zylinderrollen (8) ausgebildet sind, die quer zur Längsachse des Gehäuses (1) angeordnet und gegen die Klemmbrücken (5a, 5b) pressbar sind.

2. Koppelvorrichtung nach Anspruch 1, dadurch gekennzeichnet, dass die Klemmbrücken jeweils mit einer zur V-förmigen Nut (4) korrespondierenden teilkreisförmigen Nut (6) versehen sind, welche dem Durchmesser des jeweiligen Lichtleitfasersteckers (2a, 2b) entsprechend gestaltet ist.

3. Koppelvorrichtung nach Anspruch 1 oder 2, dadurch gekennzeichnet, dass die V-förmige sowie die teilkreisförmige Nut (4, 6) jeweils so ausgebildet ist, dass bei in die Koppelvorrichtung eingebrachten und betriebsfertig montierten Lichtleitfasersteckern (2a, 2b) zwischen dem Prisma (3) und der jeweiligen Klemmbrücke (5a, 5b) ein Luftspalt (13) besteht.

4. Koppelvorrichtung nach einem der vorhergehenden Ansprüche 1 bis 3, dadurch gekennzeichnet, dass die Zylinderrollen (8) in einer einheitlichen, das Gehäuse (1) vollständig durchsetzenden Aussparung angeordnet sind, wobei die Zylinderrollen (8) entsprechend ihrer Zugehörigkeit zur jeweiligen Klemmbrücke (5a, 5b) mittels eines mittig zum Gehäuse (1) angeordneten Sperrstifts (9) separierbar sind.

## Revendications

1. Dispositif de couplage destiné à des fibres optiques montées dans des fiches (2a, 2b) muni d'un boîtier (1) et d'un corps de serrage (3, 5a, 5b) divisé dans lea sens de son axe longitudinal ainsi que dans le sens perpendiculaire à celui-ci, corps de serrage qui permet de fixer les fiches et qui, conjointement avec des corps de pression (8) agissant sur celui-ci, est disposé dans un évidement du boîtier (1), la hauteur intérieure de l'évidement (7) destiné aux corps de pression (8) étant choisie de façon à être supérieure au diamètre des corps de pression (8) et les corps de pression (8) pouvant être serrés contre le corps de serrage (3, 5a, 5b) à l'aide de transmission de force (10) par la rotation de bouchons filetés (11) prévus aux extrémités et pouvant être au boîtier (1), caractérisé en ce que le corps de serrage (3, 5a, 5b) est constitué d'une partie inférieure (3) correspondant à la longueur du boîtier (1) et de deux parties supérieures séparées identiques (5a, 5b) correspondant ensemble à la longueur du boîtier (1), en ce que la partie inférieure (3) est réalisée sous la forme d'un prisme (3) présentant une rainure en V (4) et les deux parties supérieure (5a, 5b) sont réalisées sous la forme de couvrejoints (5a, 5b) et en ce que les corps de pression (8) sont réalisés sous la forme de rouleaux cylindriques (8) qui sont disposés perpendiculairement à l'axe longitudinal du boîtier (1) et qui peuvent être appuyés contre les couvre-joints (5a, 5b).

2. Dispositif de couplage selon la revendication 1, caractérisé en ce que les couvre-jonts présentent chacun une rainure (6) correspondant à la rainure en V (4) et présentant la forme d'un cercle partiel dont le diamètre correspond à celui de la fiche de fibre optique associée (2a, 2b).

3. Dispositif de couplage selon la revendication 1 ou 2, caractérisé en ce que la rainure en V (4) aussi bien que la rainure sous la forme d'un cercle partiel (6) sont formées de façon que, les fiches (2a, 2b) étant introduites et montées à l'état de fonctionnement dans le dispositif de couplage, le prisme (3) et le couvre-joint correspondant (5a, 5b) sont séparés par un espace (13).

4. Dispositif de couplage selon l'une quelconque des revendications 1 à 3, caractérisé en ce que les rouleaux cylindriques (8) sont disposés dans un évidement unique pratiqué sur toute la longueur du boîtier (1), alors que selon leur association avec les couvre-joints relatifs (5a, 5b), les rouleaux cylindriques (8) peuvent être séparés par une broche de blocage (9) disposé dans le centre du boîtier (1).

**Claims**

1. A coupling device for optical fibres mounted in plugs (2a, 2b), comprising a housing (1) and a clamping body (3, 5a, 5b) which is divided in the direction of its longitudinal axis as well as in the direction transverse thereto and by means of which the plugs can be clamped, said clamping body being accomodated in a recess in the housing (1) together with pressure bodies (8) which act on said plugs, the height of the recess (7) for the pressure bodies(8) being proportional so that it is larger than the diameter of the pressure bodies (8), it being possible to press the pressure bodies (8) against the clamping body (3, 5a, 5b) by means of force-transmitting pressure pieces (10) by rotation of screw caps (11) which can be connected to the housing (1) at the extremities thereof, characterized in that the clamping body (3, 5a, 5b) consists of a lower portion (3) which corresponds to the length of the housing (1) and two separate identical upper portions (5a, 5b) which together correspond to the length of the housing (1), the lower portion (3) being constructed as a prism (3) comprising a V-shaped groove (4), the two upper portions (5a, 5b) being constructed as clamps (5a, 5b), the pressure bodies (8) being constructed as cylindrical rollers (8) which are arranged transverse to the longitudinal axis of the housing (1) and which can be pressed against the clamps (5a, 5b).

2. A coupling device as claimed in Claim 1, characterized in that each of the clamps comprises a partly circular groove (6) which corresponds to the V-shaped groove (4) and which is shaped so as to correspond to the diameter of the relevant optical fibre plug (2a, 2b).

3. A coupling device as claimed in Claim 1 or 2, characterized in that the V-shaped groove (4) as well as the partly circular groove (6) is each time shaped so that an air gap (13) exists between the prism (3) and the relevant clamp (5a, 5b) in the operational condition when the optical fibre plugs (2a, 2b) have been inserted into the coupling device.

4. A coupling device as claimed in any one of the preceding Claims 1 to 3, characterized in that the cylindrical rollers (8) are accomodated in a single recess which extends throughout the housing (1), the cylindrical rollers (8) be separable according to their association with the relevant clamp (5a, 5b) by means of a locking pin (9) which is arranged in the centre of the housing (1).

FIG.1

FIG.2

0 043 422